# EUROPEAN PATENT SPECIFICATION

(11) **EP 2 618 402 B1**
(45) Date of publication and mention of the grant of the patent: **19.10.2016**
(21) Application number: 13151565.2
(22) Date of filing: 17.01.2013
(51) Int. Cl.: H01M 2/16, H01M 10/052

(54) **Electricity supply element and ceramic separator thereof**
Stromzufuhrelement und keramischer Separator dafür
Élément d'alimentation en électricité et son séparateur en céramique

(30) Priority: 20.01.2012 TW 101102560
(43) Date of publication of application: 24.07.2013
(73) Proprietor: Prologium Holding Inc., Grand Cayman, KY1-1104 (KY)
(72) Inventor: Yang, Szu-Nan, Taipei (TW)
(74) Representative: Chaillot, Geneviève

(56) References cited:
- EP-A1- 1 939 962
- WO-A2-2009/069928
- US-A1- 2010 316 903

## Description

### BACKGROUND OF THE INVENTION

### Field of Invention

The present invention relates to an electricity supply element, in particular to an electricity supply element having a ceramic separator to enhance heat tolerance and the ion conductivity.

### Related Art

The separator (film) is an important unit of an lithium battery. The separator is disposed between the positive electrode layer and the negative electrode layer. The separators are used to electrically insulate the negative and positive electrode layers so that the battery electrolyte forms the only ionically conducting path therebetween. In order for the separators to provide this insulating function, the separators must exhibit a high electrical resistance, must be chemically stable in the electrolyte environment, must resist stiffening and cracking, must be wettable to the battery electrolyte, and must limit active material transport.

The microporous polyolefin film, such as PE or PP, is widely used to manufacture battery separators because it is chemically stable and outstanding in physical properties. The melting point of the PE is about 130°C, and the melting point of the PP is about 160°C. Limited thermal and mechanical stability of the polymer separator may lead to overheating of the battery and explosion caused by separators melting and rupturing. Thermal operation window of separator in a battery is determined by shutdown temperature and melt down temperature. Therefore, in recent years, ceramic separators with high thermal stability and good wettability are developed.

There are two types of the ceramic separator. The first type is used the ceramic particles as the main material of the separator to replace the polyolefin, such as US patent no. 5,342,709. The second type is utilized the ceramic particles to be coated on a film made of PET, PEN or PI, such as US patent application publication no. 2008/0138700.

For the first type, the ceramic particles of the separator are bonded with the electrode layer by the adhesive. The binder system of the adhesive is similar to the binder system of the electrode layers. Therefore, the solvent systems are also similar. When drying the solvent after coating, the particles rearrangement and the adhesive entanglement are occurred and the holes are produced in the bulk and at the interfaces. The holes would be a good path for ion mobility. However, due to the solvent is removed in a short time, the holes may be huge to induce micro-short. Therefore, the electrical insulation of the electrodes in battery will be compromised.

For the second type, the adhesive, such as Polyvinylidene fluoride (PVDF) or PVDF-HFP, is used to bind the ceramic particles on the surface of a substrate film. Moreover, the film has holes to permit the ion migration. The ceramic particles are coated on the substrate film meant to ensure the electrical insulation of the electrodes at abnormal conditions. However, the adhesion between the PVDF or PVDF-HFP, and material of the substrate film, such as PET, PEN or PI, is weak, and the ceramic particles are easy to peel off. To increase the particle's adhesion to the substrate film, the percentage of the adhesive has to be higher. However, the ion conductivity would be lowered accordingly.

Also, if the amount of the ceramic particles is raised to enhance the ion conductivity, the amount of the adhesive also has to be raised accordingly to maintain enough adhesion. Therefore, the percentage of the ceramic particles is limited, only 40 % at most. The ion conductivity is limited. To increase the ion conductivity, the plasticizer or non-solvent are added into the adhesive. After the formation of the separator film, the plasticizer or non-solvent is removed to obtain holes for ion mobility to enhance the ion conductivity.

Furthermore, the ceramic particles may easily absorb water, which will significantly deteriorate battery performance. To remove the absorbed water of the ceramic particles, it has to be heated at a temperature over 190°C. However, the melting point of the adhesive is not high enough. For example, the melting point of the PVDF is about 170°C, and the melting point of the PVDF-HEP is about 120-150°C. When the separator is heated at 190°C, the adhesive would melt. The distribution of the holes within the separator would be changed to worsen the electric property of the battery. Even adding the plasticizer or non-solvent as above mentioned, the holes would be refilled by the molten adhesive to lower the ion conductivity.

On the other hand, if the materials of the adhesive with high heat tolerance are used, such as epoxy resin, acrylic acid resin, polyacrylonitrile (PAN), the thermal stability and the adhesion will be improved. However, these materials would form such cross-linking network with dense structure which significantly reduces ion migration and final battery performance. In other words, the distribution of the holes is not suitable for ion migration. Therefore, the ion conductivity is very low.

US 2010/316903 and WO 2009/069928 discloses electricity supply elements as described above.

### SUMMARY OF THE INVENTION

It is an objective of this invention to provide an electricity supply element and the ceramic separator thereof. The ceramic separator is made of ceramic particulates and the adhesive. The adhesive employs dual binder system, which includes linear polymer and cross-linking polymer. The adhesion and heat tolerance are enhanced by the characteristic of the two type of polymers. Therefore, the adhesive can stand at high-temperature without melting during the process of removing the absorbed water from the ceramic particulates. The ceramic separator would not be cracked and the holes, ion-migration paths, between the two electrode layers would be maintained during high operation temperature. Also, the ceramic separator enhances the ion conductivity, reduces the possibility of the micro-short and increases practical utilization. Moreover, by the dual binder system, a higher percentage of the ceramic particulates is obtained. The structure and the distribution of the holes, formed by the ceramic particulates and the dual binder system thereon, is optimized to promote a better balance between of the electrical insulation and the ionic conductivity. Therefore, the electric property of the electricity supply element is improved.

It is another objective of the present invention to provide an electricity supply element and the ceramic separator thereof. The adhesive includes the linear polymer and the cross-linking polymer to be with both characteristics of adhesion and ion-migration path. A higher percentage of the ceramic particulates is obtained to improve the heat tolerance.

In order to implement the abovementioned, this invention discloses an electricity supply element and the ceramic separator thereof. The electricity supply element includes a first electrode substrate, a second electrode substrate and a ceramic separator. The first electrode substrate includes a first current collector layer and a first active material layer, and the second electrode substrate includes a second current collector layer and a second active material layer. The ceramic separator is disposed between the first electrode substrate and the second electrode substrate. The ceramic separator is disposed on the first current collector layer and the second current collector layer, or disposed on the first active material layer and the second active material layer. The ceramic separator is composed of a plurality of ceramic particulates and a dual binder system thereon. The dual binder system includes a linear polymer and a cross-linking polymer. The adhesion for the ceramic particulates is improved to obtain a higher percentage of the ceramic particulates. The ceramic separator is suitable for electrical insulation and ion migration permission. Therefore, the structural strength, the ion conductivity, electrical insulation and the heat tolerance are improved and enhanced.

In another embodiment, the electricity supply element includes a substrate, a first current collector layer, a first active material layer, and a second current collector layer, a second active material layer. The substrate includes a plurality of holes, which are filled with a plurality of ceramic particulates and a dual binder system thereon. The dual binder system includes a linear polymer and a cross-linking polymer. The first and the second current collector layers are deposed on the two opposite sides of the substrate and have holes according to the holes of the substrate. The active material layers are disposed on the outer side of the current collector layers respectively. Therefore, the substrate is served as a separator to permit ion migration between the first active material layer and the second active material layer. The electric charge is outputted through the current collector layers which disposed on the substrate.

The ceramic separator of this invention is electrically and electrochemically inactive and composed of a plurality of ceramic particulates and a dual binder system thereon. The dual binder system includes a linear polymer and a cross-linking polymer, and the dual binder system includes about 0.01 to about 60 percent by weight of the cross-linking polymer.

The cross-linking polymer may be a cross-linking polymer with network structure, such as epoxy resin, acrylic acid resin, polyacrylonitrile (PAN) or combinations thereof. The cross-linking polymer also may be a cross-linking polymer with ladder structure, such as polyimide (PI) and the derivatives thereof.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow illustration only, and thus are not limitative of the present invention, and wherein:
FIGS. 1A and 1B illustrate the cross-sectional views of the electricity supply element of this invention.
FIG. 2 illustrates the cross-sectional view of other embodiment of the electricity supply element of this invention.
FIG. 3 illustrates the cross-sectional view of another embodiment of the electricity supply element of this invention.
FIGS. 4A and 4B illustrates the cross-sectional views of the electricity supply system of this invention, which further including a separator film.

### DETAILED DESCRIPTION OF THE INVENTION

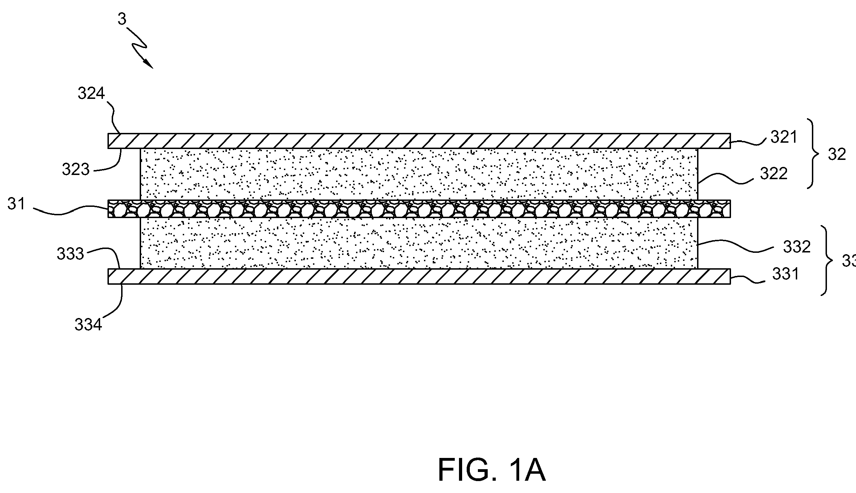

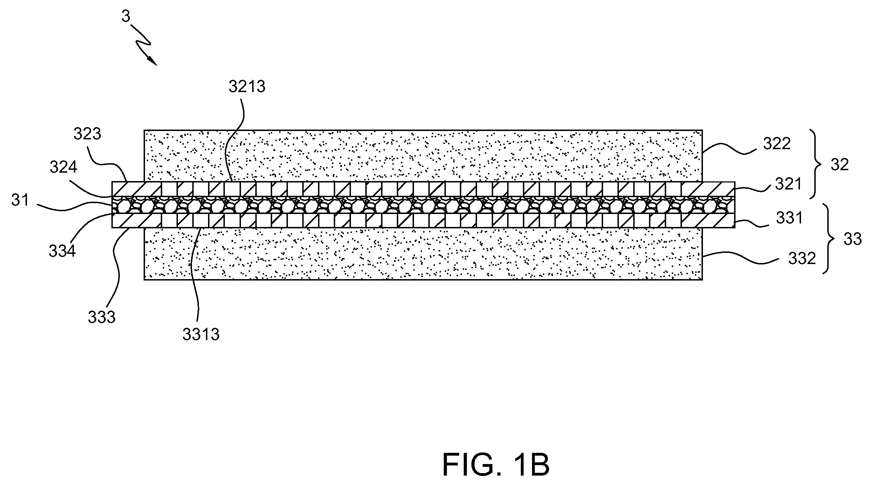

FIGS. 1A and 1B illustrate the cross-sectional views of the electricity supply element of this invention. The electricity supply element 3 includes a first electrode substrate 32, a second electrode substrate 33 and a ceramic separator 31. The first electrode substrate 32 includes a first current collector layer 321 and a first active material layer 322. The first current collector layer 321 has a first surface 323 and an opposed second surface 324. The first active material layer 322 is disposed on the first surface 323 of the first current collector layer 321. The second electrode substrate 33 includes a second current collector layer 331 and a second active material layer 332. The second current collector layer 331 has a first surface 333 and an opposed second surface 334. The second active material layer 332 is disposed on the first surface 333 of the second current collector layer 331.

The ceramic separator 31 is disposed between the first electrode substrate 32 and the second electrode substrate 33. The ceramic separator 31 may be disposed on the first active material layer 322 and the second active material layer 332, see FIG. 1A, or disposed on the second surface 324 of the first current collector layer 321 and the second surface 334 of the second current collector layer 331, see FIG. 1B.

The ceramic separator 31 is composed of a plurality of ceramic particulates and a dual binder system served as an adhesive to bind thereon. The dual binder system includes a linear polymer and a cross-linking polymer. The dual binder system includes about 0.01 to about 60 percent by weight of the cross-linking polymer. The ceramic particulates include TiO₂, Al₂O₃, SiO₂ with nanometer or micrometer scale, or alkylation, alkaline earth metal phosphate, alkaline metal phosphate, alkaline earth metal carbonate, alkaline earth carbonate and combinations thereof.

The adhesion for the ceramic particulates is improved to obtain a higher percentage of the ceramic particulates. The ceramic separator is suitable for insulation electrically and to permit ion migration. Therefore, the structural strength, the ion conductivity, electrical insulation and the heat tolerance are improved and enhanced. The linear polymer of the dual binder system may be Polyvinylidene fluoride (PVDF), polyvinylidene fluoride co-hexafluoropropylene (PVDF-HFP), Polytetrafluoroethene (PTFE), polymethylacrylate, polyacrylamide, and combinations thereof.

The ceramic particulates is the main material of the ceramic separator 31, so that the structural strength of the ceramic separator 31 is high enough to support the first electrode substrate 32 and/or the second electrode substrate 33. The ceramic separator 31 is electrically and electrochemically inactive. Also, the ceramic separator 31 is electrical insulating to isolate electrically the first electrode substrate 32 and the second electrode substrate 33. Furthermore, the adhesive utilizes the dual binder system, which includes the linear polymer and the cross-linking polymer. The cross-linking polymer is with higher adhesion strength. Cooperating with the linear polymer, the rigidity of the adhesive structure would not be so high as to prevent the structure to break easily. Therefore, the first electrode substrate 32 and the second electrode substrate 33 are bonded firmly to achieve the stability and safety of the electricity supply element 3.

Moreover, by the dual binder system, a higher percentage of the ceramic particulates is obtained, more than 60% or even up to 90%. The thermal stability and the heat tolerance are enhanced. Also, the structure and the distribution of the holes, formed by packing of the ceramic particulates, is optimized. And the barriers to block the ion migration are decreased due to the percentage of the adhesive is lower. Therefore, the ionic conductivity is improved.

The cross-linking polymer of the dual binder system may be a cross-linking polymer with network structure, such as epoxy resin, acrylic acid resin, polyacrylonitrile (PAN) and combinations thereof. Their own network cross-linking structure is dense structure. Even cooperating with the linear polymer, the distribution of the holes is inadequate for ion migration. Also, the amount/volume of solid barriers would be increased accordingly. Therefore, the ionic conductivity of this structure is moderately less than the ionic conductivity of the conventional separator (film). However, the possibility and amount of existence of the huge holes are reduced, and the electrical insulation is improved.

Therefore, the cross-linking polymer of the dual binder system may be a cross-linking polymer with ladder structure, such as polyimide (PI) and the derivatives thereof. Cooperating with the linear polymer, the distribution of the holes of the ceramic separator 31 is very well for ion migration. And the amount/volume of solid barriers would be much decreased accordingly. The distribution of the holes is even better than the separator using only linear polymer as adhesive. Therefore, the ionic conductivity of this structure is better than the ionic conductivity of the conventional separator (film). Also, the ladder cross-linking polymer, such as PI, is an electrically inactive material to promote a better balance of the electrically inactive and the ionic conductivity.

On the other hand, the ceramic separator 31 is formed on the electrode layers. After curing process, the possibility of the huge holes existed at the interfaces caused by removing the solvent is reduced due to the cross-linking polymer structure. The electrical insulation is maintained and the possibility of the micro-short is reduced. Also, the cross-linking polymer structure is with high thermal stability to stand at high-temperature without melting during the process of removing the absorbed water from the ceramic particulate's surface. The cross-linking polymer structure also can stand the heat generated during charge or discharge process to maintain the respective position of the first electrode substrate 32 and the second electrode substrate 33 to improve the stability, safety, and battery performance of the electricity supply element 3.

Please refer to FIG. 1B, to permit ion migration between the first electrode substrate 32 and the second electrode substrate 33, the first current collector layer 321 has a plurality of holes 3213 and the second current collector layer 331 has a plurality of holes 3313. The electrolyte impregnated into the first active material layer 322 and the second active material layer 332. The electrolyte is a solid electrolyte, a liquid electrolyte, or a gelled electrolyte. Also, because of the wettability of the ceramic material is good, the distribution of the electrolyte is very well.

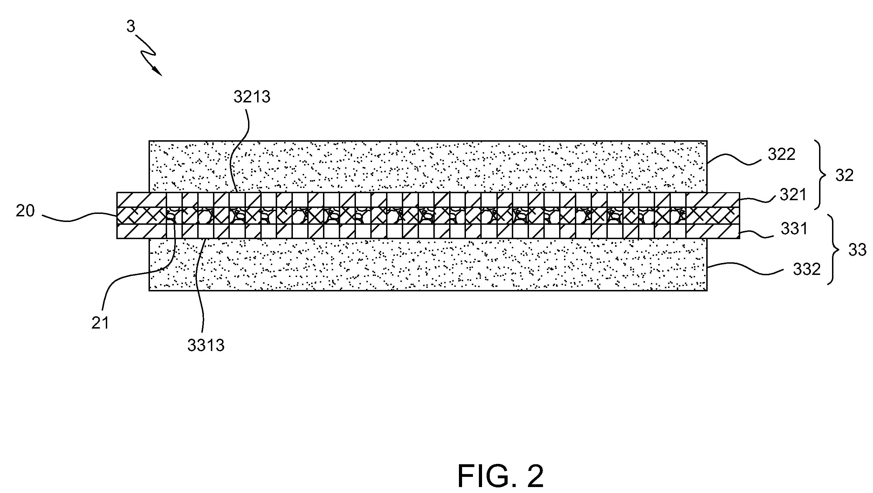

As shown in FIG. 2, in this embodiment, the ceramic separator 31 is replaced by a substrate 20, comparing to FIG. 1B. The substrate 20 includes a plurality of holes 21 according to the holes 3213, 3313 of the first current collector layer 321 and the second current collector layer 331. Due to the first current collector layer 321, the substrate 20 and the second current collector layer 331 have the holes 3213, 21 and 3313, the electrolyte is easier to impregnate into therein.

The substrate 20 is a flexible circuit board or a rigid circuit board. As refer to FIG. 2, the first current collector layer 321 and the second current collector layer 331 are disposed on the substrate 20. Therefore, a logic circuit area may be formed by extending from the substrate 20 to output electricity directly to the outside circuit/load directly. The material of the substrate 20 is insulating materials, includes polyimide (PI), polyethylene terephthalate (PET), polyethylene naphthalate (PEN), glass fiber, and liquid crystal polymer, or the combination thereof. The substrate 20 has the holes 21 to permit ion migration. The holes 21 are formed by through holes, ant holes (non-through holes), or porous material, and filled with a plurality of ceramic particulates and a dual binder system served as an adhesive to bind thereon. The dual binder system also includes a linear polymer and a cross-linking polymer. As above-mentioned, the ionic conductivity of the electricity supply element 3 is improved.

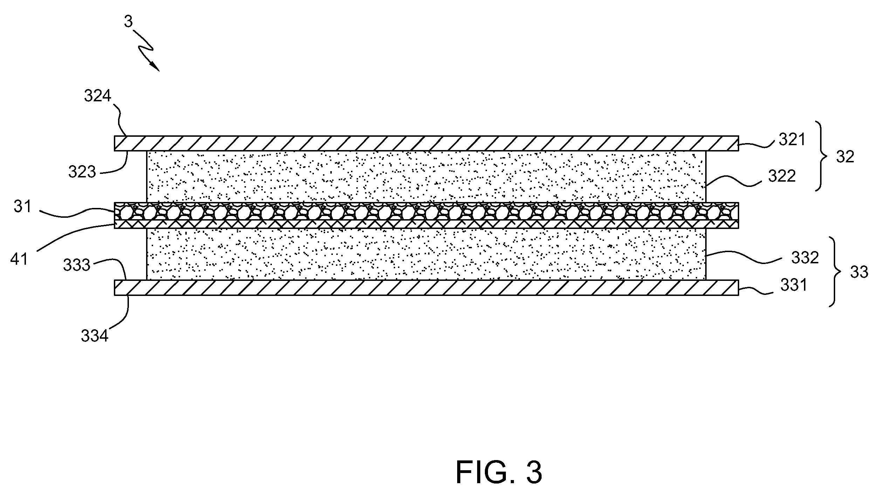

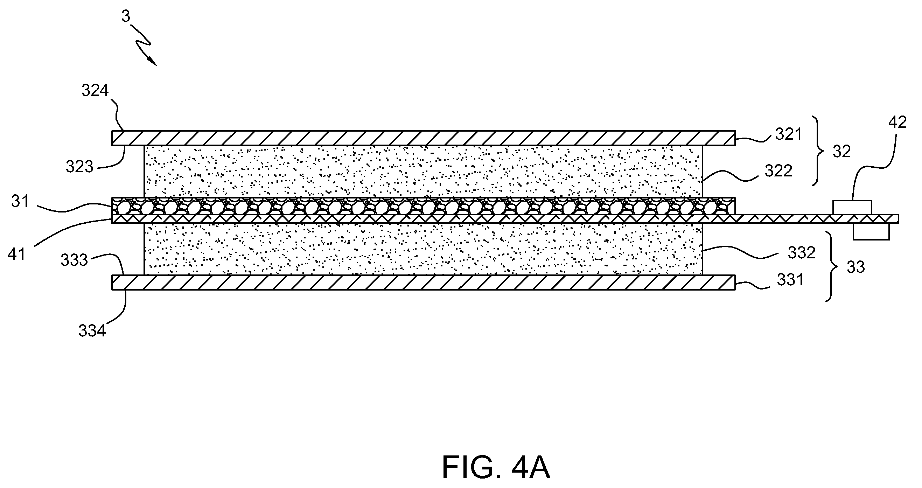

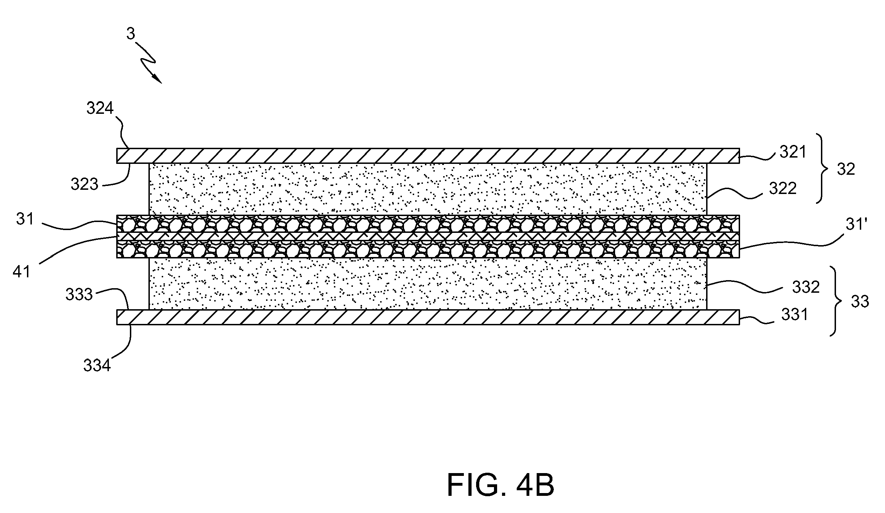

Please refer to FIG. 3, a separator film 41 is disposed on one side of the ceramic separator 31. The material of the separator film 41 is insulating materials, such as polyimide (PI), polyethylene terephthalate (PET), polyethylene naphthalate (PEN), glass fiber, and liquid crystal polymer, or the combination thereof. Also, please see FIG. 4A, the separator film 41 extends outside the ceramic separator 31 for carry at least one electric component 42 thereon. Moreover, another ceramic separator 31' may be disposed on another side of the separator film 41, please see FIG. 4B.

In the above-mentioned embodiments of the electricity supply element 3, any conventional package method may be used to pack.

## Claims

1. An electricity supply element (3), comprising:
a first electrode substrate (32), including a first current collector layer (321) and a first active material layer (322), wherein the first current collector layer (321) includes a first surface (323) and a second surface (324) opposed each other, the first active material layer (322) is disposed on the first surface (323) of the first current collector layer (321); and
a second electrode substrate (33), including a second current collector layer (331) and a second active material layer (332), wherein the second current collector layer (331) includes a first surface (333) and a second surface (334) opposed each other, the second active material layer (332) is disposed on the first surface (333) of the second current collector layer (331), and a ceramic separator (31) according to claim 17.

2. The electricity supply element of claim 1, wherein the ceramic separator (31) is disposed on the second surface (324) of the first current collector layer (321) of the first electrode substrate (32) and the second surface (334) of the second current collector layer (331) of the second electrode substrate (33).

3. The electricity supply element of claim 2, wherein the first current collector layer (321) and the second current collector layer (331) include a plurality of holes (3213, 3313) to permit an ion migration between the first active material layer (322) and the second active material layer (332).

4. The electricity supply element of claim 1, wherein the ceramic separator (31) is disposed on the first active material layer (322) of the first electrode substrate (32) and the second active material layer (332) of the second electrode substrate (33).

5. The electricity supply element of claim 1, further comprises a separator film (41) disposed on the ceramic separator (31).

6. The electricity supply element of claim 5, wherein the separator film (41) is formed of insulating material including polyimide (PI), polyethylene terephthalate (PET), polyethylene naphthalate (PEN), glass fiber, and liquid crystal polymer.

7. The electricity supply element of claim 6, wherein the separator film (41) extends outside the ceramic separator (31) for carry at least one electric component (42) thereon.

8. The electricity supply element of claim 5, further comprises another ceramic separator (31') disposed another side of the separator film (41).

9. An electricity supply element (3), **characterized by** the fact that it comprises:
a substrate (20), including a plurality of holes (21), which are filled with a plurality of ceramic particulates and an adhesive, wherein the adhesive employs a dual binder system that includes a linear polymer and a cross-linking polymer and wherein the ceramic particulates occupy from 60 to 90 percent of the ceramic substrate (20);
a first current collector layer (321), disposed on one side of the substrate (20) and including a plurality of holes (3213) according to the holes (21) of the substrate (20);
a second current collector layer (331), disposed on an opposite side of the substrate (20) and including a plurality of holes (3313) according to the holes (21) of the substrate (20);
a first active material layer (322), disposed on the first current collector layer (321); and
a second active material layer (332), disposed on the second current collector layer (331).

10. The electricity supply element of claim 9, wherein the substrate (20) is formed of insulating material including polyimide (PI), polyethylene terephthalate (PET), polyethylene naphthalate (PEN), glass fiber, and liquid crystal polymer.

11. The electricity supply element of claim 9, wherein the holes (21) of the substrate (20) are formed by through holes, ant holes, or porous material.

12. The electricity supply element of claim 1 or 9, wherein the ceramic particulates comprise TiO₂, Al₂O₃, SiO₂ with nanometer or micrometer scale and combinations thereof.

13. The electricity supply element of claim 1 or 9, wherein the linear polymer of the dual binder system is selected from the group consisting of Polyvinylidene fluoride (PVDF), polyvinylidene fluoride co-hexafluoropropylene (PVDF-HFP), Polytetrafluoroethene (PTFE), polymethylacrylate, polyacrylamide and combinations thereof.

14. The electricity supply element of claim 1 or 9, wherein the cross-linking polymer of the dual binder system is a cross-linking polymer with network structure, which is selected from the group consisting of epoxy resin, acrylic acid resin, polyacrylonitrile (PAN) and combinations thereof.

15. The electricity supply element of claim 1 or 9, wherein the cross-linking polymer of the dual binder system is a cross-linking polymer with ladder structure.

16. The electricity supply element of claim 15, wherein the dual binder system comprises about 0.01 to about 60 percent by weight of the polyimide.

17. A ceramic separator (31), being electrically and electrochemically inactive, **characterized in that** the ceramic separator (31) is composed of a plurality of ceramic particulates and an adhesive, wherein the adhesive employs a dual binder system includes a linear polymer and a cross-linking polymer, and the dual binder system comprises about 0.01 to about 60 percent by weight of the cross-linking polymer, wherein the ceramic particulates occupy from 60 to 90 percent of the total volume of the ceramic separator (31).

18. The ceramic separator of claim 17, wherein the ceramic particulates comprise TiO₂ Al₂O₃, SiO₂ with nanometer or micrometer scale and combinations thereof.

19. The ceramic separator of claim 17, wherein the non-cross-linked polymer of the dual binder system is selected from the group consisting of Polyvinylidene fluoride (PVDF), polyvinylidene fluoride co-hexafluoropropylene (PVDF-HFP), Polytetrafluoroethene (PTFE), polymethylacrylate, polyacrylamide and combinations thereof.

20. The ceramic separator of claim 17, wherein the cross-linked polymer of the dual binder system is a crossl-inked polymer with network structure, which is selected from the group consisting of epoxy resin, acrylic acid resin, polyacrylonitrile (PAN) and combinations thereof.

21. The ceramic separator of claim 17, wherein the cross-linked polymer of the dual binder system is a cross-linked polymer with ladder structure.

## Patentansprüche

1. Stromzufuhrelement (3), mit:
einem ersten Elektrodensubstrat (32), das eine erste Stromabnehmerschicht (321) und eine erste Schicht mit aktivem Material (322) umfasst, wobei die erste Stromabnehmerschicht (321) eine erste Oberfläche (323) und eine zweite Oberfläche (324) umfasst, die einander entgegengesetzt sind, wobei die erste Schicht mit aktivem Material (322) auf der ersten Oberfläche (323) der ersten Stromabnehmerschicht (321) angebracht ist; und
einem zweiten Elektrodensubstrat (33), das eine zweite Stromabnehmerschicht (331) und eine zweite Schicht mit aktivem Material (332) umfasst, wobei die zweite Stromabnehmerschicht (331) eine erste Oberfläche (333) und eine zweite Oberfläche (334) umfasst, die einander entgegengesetzt sind, wobei die zweite Schicht mit aktivem Material (332) auf der ersten Oberfläche (333) der zweiten Stromabnehmerschicht (331) angebracht ist, und einem keramischen Separator (31) nach Anspruch 17.

2. Stromzufuhrelement nach Anspruch 1, wobei der keramische Separator (31) auf der zweiten Oberfläche (324) der ersten Stromabnehmerschicht (321) des ersten Elektrodensubstrats (32) und der zweiten Oberfläche (334) der zweiten Stromabnehmerschicht (331) des zweiten Elektrodensubstrats (33) angebracht ist.

3. Stromzufuhrelement nach Anspruch 2, wobei die erste Stromabnehmerschicht (321) und der zweite Stromabnehmerschicht (331) eine Vielzahl von Löchern (3213, 3313) umfassen, um eine Ionenwanderung zwischen der ersten Schicht mit aktivem Material (322) und der zweiten Schicht mit aktivem Material (332) zu gestatten.

4. Stromzufuhrelement nach Anspruch 1, wobei der keramische Separator (31) auf der ersten Schicht mit aktivem Material (322) des ersten Elektrodensubstrats (32) und der zweiten Schicht mit aktivem Material (332) des zweiten Elektrodensubstrats (33) angebracht ist.

5. Stromzufuhrelement nach Anspruch 1, mit des Weiteren einer Trennfolie (41), die auf dem keramischen Separator (31) angeordnet ist.

6. Stromzufuhrelement nach Anspruch 5, wobei die Trennfolie (41) aus Isoliermaterial gebildet ist, einschließlich Polyimid (PI), Polyäthylenterephthalat (PET), Polyäthylennaphthalat (PEN), Glasfaser und Flüssigkristallpolymer.

7. Stromzufuhrelement nach Anspruch 6, wobei die Trennfolie (41) sich außerhalb des keramischen Separators (31) erstreckt, um mindestens einen elektrischen Bestandteil (42) darauf zu tragen.

8. Stromzufuhrelement nach Anspruch 5, mit einem weiteren keramischen Separator (31'), der an einer anderen Seite der Trennfolie (41) angeordnet ist.

9. Stromzufuhrelement (3), **dadurch gekennzeichnet, dass** es folgendes umfasst:
ein Substrat (20), einschließlich einer Vielzahl von Löchern (21), die mit einer Anzahl von Keramikpartikeln und einem Klebstoff gefüllt werden, wobei der Klebstoff ein Doppelbindersystem verwendet, das ein lineares Polymer und ein Vernetzungspolymer umfasst, wobei die Keramikpartikel 60 bis 90 Prozent des keramischen Substrats (20) einnehmen;
eine erste Stromabnehmerschicht (321), die an einer Seite des Substrats (20) angeordnet ist, mit einer Vielzahl von Löchern (3213) gemäß den Löchern (21) des Substrats (20) ;
eine zweite Stromabnehmerschicht (331), die an einer gegenüberliegenden Seite des Substrats (20) angeordnet ist, mit einer Vielzahl von Löchern (3313) gemäß den Löchern (21) des Substrats (20);
eine erste Schicht mit aktivem Material (322), die auf der ersten Stromabnehmerschicht (321) angeordnet ist; und
eine zweite Schicht mit aktivem Material (332) auf der zweiten Stromabnehmerschicht (331).

10. Stromzufuhrselement nach Anspruch 9, wobei das Substrat (20) aus Isoliermaterial gebildet ist, einschließlich Polyimid (PI), Polyäthylenterephthalat (PET), Polyäthylennaphthalat (PEN), Glasfaser und Flüssigkristallpolymer.

11. Stromzufuhrelement nach Anspruch 9, wobei die Löcher (21) des Substrats (20) aus Durchgangsbohrungen, Ameisenlöchern oder porösem Material gebildet sind.

12. Stromzufuhrelement nach Anspruch 1 oder 9, wobei die Keramikpartikel TiO₂, Al₂O₃, SiO₂ mit Nanometer- oder Mikrometerskala und Kombinationen davon umfassen.

13. Stromzufuhrelement nach Anspruch 1 oder 9, wobei das lineare Polymer des Doppelbindersystems aus folgender Gruppe ausgewählt ist: Polyvinylidenfluorid (PVDF), Polyvinylidenfluorid-Co-Hexafluoropropylen (PVDF-HFP), Polytetrafluoroethen (PTFE), Polymethylacrylat, Polyacrylamid und Kombinationen davon.

14. Stromzufuhrelement nach Anspruch 1 oder 9, wobei das Vernetzungspolymer des Doppelbindersystems ein Vernetzungspolymer mit Netzwerkstruktur ist, das aus folgender Gruppe ausgewählt ist: Epoxyharz, Akrylsäureharz, Polyacrylnitril (PAN) und Kombinationen davon.

15. Stromzufuhrelement nach Anspruch 1 oder 9, wobei das Vernetzungspolymer des Doppelbindersystems ein Vernetzungspolymer mit Leiterstruktur ist.

16. Stromzufuhrelement nach Anspruch 15, wobei das Doppelbindersystem etwa 0,01 bis etwa 60 Gewichtsprozent des Polyimids umfasst.

17. Keramischer Separator (31), der elektrisch und elektrochemisch inaktiv ist, **gekennzeichnet dadurch, dass** der keramische Separator (31) aus einer Vielzahl von Keramikpartikeln und einem Klebstoff besteht, wobei der Klebstoff einen Doppelbindersystem verwendet, der ein lineares Polymer und ein Vernetzungspolymer umfasst, und das Doppelbindersystem etwa 0,01 bis etwa 60 Gewichtsprozent des Vernetzungspolymers umfasst, wobei die Keramikpartikel 60 bis 90 Prozent des Gesamtvolumens des keramischen Separators (31) einnehmen.

18. Keramischer Separator nach Anspruch 17, wobei die Keramikpartikel TiO₂, Al₂O₃, SiO₂ mit Nanometer- oder Mikrometerskala und Kombinationen davon umfassen.

19. Keramischer Separator nach Anspruch 17, wobei das nicht vernetzte Polymer des Doppelbindersystems aus folgender Gruppe ausgewählt ist: Polyvinylidenfluorid (PVDF), Polyvinylidenfluorid-Co-Hexafluoropropylen (PVDF-HFP), Polytetrafluoroethen (PTFE), Polymethylacrylat, Polyacrylamid und Kombinationen davon.

20. Keramischer Separator nach Anspruch 17, wobei das vernetzte Polymer des Doppelbindersystems ein vernetztes Polymer mit Netzwerkstruktur ist, das aus folgender Gruppe ausgewählt ist: Epoxyharz, Akrylsäureharz, Polyacrylnitril (PAN) und Kombinationen davon.

21. Keramischer Separator nach Anspruch 17, wobei das vernetzte Polymer des Doppelbindersystems ein vernetztes Polymer mit Leiterstruktur ist.

## Revendications

1. Elément d'alimentation en électricité (3), comprenant :
un premier substrat d'électrode (32), comprenant une première couche de collecteur de courant (321) et une première couche de matériau actif (322), dans lequel la première couche de collecteur de courant (321) comprend une première surface (323) et une seconde surface (324) opposées l'une à l'autre, la première couche de matériau actif (322) est disposée sur la première surface (323) de la première couche de collecteur de courant (321) ; et
un second substrat d'électrode (33), comprenant une seconde couche de collecteur de courant (331) et une seconde couche de matériau actif (332), dans lequel la seconde couche de collecteur de courant (331) comprend une première surface (333) et une seconde surface (334) opposées l'une à l'autre, la seconde couche de matériau actif (332) est disposée sur la première surface (333) de la seconde couche de collecteur de courant (331),
et un séparateur en céramique (31) selon la revendication 17.

2. Elément d'alimentation en électricité selon la revendication 1, dans lequel le séparateur en céramique (31) est disposé sur la seconde surface (324) de la première couche de collecteur de courant (321) du premier substrat d'électrode (32) et la seconde surface (334) de la seconde couche de collecteur de courant (331) du second substrat d'électrode (33).

3. Elément d'alimentation en électricité selon la revendication 2, dans lequel la première couche de collecteur de courant (321) et la seconde couche de collecteur de courant (331) comprennent une pluralité de trous (3213, 3313) pour permettre une migration d'ions entre la première couche de matériau actif (322) et la seconde couche de matériau actif (332).

4. Elément d'alimentation en électricité selon la revendication 1, dans lequel le séparateur en céramique (31) est disposé sur la première couche de matériau actif (322) du premier substrat d'électrode (32) et la seconde couche de matériau actif (332) du second substrat d'électrode (33).

5. Elément d'alimentation en électricité selon la revendication 1, comprenant en outre un film de séparateur (41) disposé sur le séparateur en céramique (31).

6. Elément d'alimentation en électricité selon la revendication 5, dans lequel le film de séparateur (41) est formé d'un matériau isolant comprenant du polyimide (PI), du téréphtalate de polyéthylène (PET), du naphtalate de polyéthylène (PEN), de la fibre de verre et un polymère à cristaux liquides.

7. Elément d'alimentation en électricité selon la revendication 6, dans lequel le film de séparateur (41) s'étend à l'extérieur du séparateur en céramique (31) pour porter au moins un composant électrique (42) sur celui-ci.

8. Elément d'alimentation en électricité selon la revendication 5, comprenant en outre un autre séparateur en céramique (31') disposé sur un autre côté du film de séparateur (41).

9. Elément d'alimentation en électricité (3), **caractérisé par le fait qu'**il comprend :
un substrat (20), comprenant une pluralité de trous (21), qui sont remplis avec une pluralité de particules de céramique et un adhésif, dans lequel l'adhésif emploie un système à double liant qui comprend un polymère linéaire et un polymère de réticulation et dans lequel les particules de céramique occupent de 60 à 90 pour cent du substrat en céramique (20) ;
une première couche de collecteur de courant (321), disposée sur un côté du substrat (20) et comprenant une pluralité de trous (3213) conformément aux trous (21) du substrat (20) ;
une seconde couche de collecteur de courant (331), disposée sur un côté opposé du substrat (20) et comprenant une pluralité de trous (3313) conformément aux trous (21) du substrat (20) ;
une première couche de matériau actif (322), disposée sur la première couche de collecteur de courant (321) ; et
une seconde couche de matériau actif (332), disposée sur la seconde couche de collecteur de courant (331).

10. Elément d'alimentation en électricité selon la revendication 9, dans lequel le substrat (20) est formé d'un matériau isolant comprenant du polyimide (PI), du téréphtalate de polyéthylène (PET), du naphtalate de polyéthylène (PEN), de la fibre de verre et un polymère à cristaux liquides.

11. Elément d'alimentation en électricité selon la revendication 9, dans lequel les trous (21) du substrat (20) sont formés par des trous traversants, des trous de fourmis ou un matériau poreux.

12. Elément d'alimentation en électricité selon la revendication 1 ou 9, dans lequel les particules de céramique comprennent TiO₂, Al₂O₃, SiO₂ avec une échelle nanométrique ou micrométrique et des combinaisons de ceux-ci.

13. Elément d'alimentation en électricité selon la revendication 1 ou 9, dans lequel le polymère linéaire du système à double liant est sélectionné parmi le groupe consistant en du polyfluorure de vinylidène (PVDF), du poly(flurorure de vinylidène co-hexafluoropropylène) (PVDF-HFP), du polytétrafluoroéthylène (PTFE), du polyméthylacrylate, du polyacrilamide et des combinaisons de ceux-ci.

14. Elément d'alimentation en électricité selon la revendication 1 ou 9, dans lequel le polymère de réticulation du système à double liant est un polymère de réticulation avec une structure de réseau, qui est sélectionné parmi le groupe consistant en de la résine époxyde, de la résine d'acide acrylique, du polyacrylonitrile (PAN) et des combinaisons de ceux-ci.

15. Elément d'alimentation en électricité selon la revendication 1 ou 9, dans lequel le polymère de réticulation du système à double liant est un polymère de réticulation avec une structure d'échelle.

16. Elément d'alimentation en électricité selon la revendication 15, dans lequel le système à double liant comprend d'environ 0,01 à environ 60 pour cent en poids du polyimide.

17. Séparateur en céramique (31), qui est électriquement et électrochimiquement inactif, **caractérisé par le fait que** le séparateur en céramique (31) est composé d'une pluralité de particules de céramique et d'un adhésif, dans lequel l'adhésif emploie un système à double liant qui comprend un polymère linéaire et un polymère de réticulation, et le système à double liant comprend d'environ 0,01 à environ 60 pour cent en poids du polymère de réticulation, les particules de céramique occupant de 60 à 90 pour cent du volume total du séparateur en céramique (31).

18. Séparateur en céramique selon la revendication 17, dans lequel les particules en céramique comprennent TiO₂, Al₂O₃, SiO₂ avec une échelle de nanométrique ou micrométrique et des combinaisons de ceux-ci.

19. Séparateur en céramique selon la revendication 17, dans lequel le polymère non réticulé du système à double liant est sélectionné parmi le groupe consistant en du polyfluorure de vinylidène (PVDF), du poly(flurorure de vinylidène co-hexafluoropropylène) (PVDF-HFP), du polytétrafluoroéthylène (PTFE), du polyméthylacrylate, du polyacrilamide et des combinaisons de ceux-ci.

20. Séparateur en céramique selon la revendication 17, dans lequel le polymère réticulé du système à double liant est un polymère réticulé avec une structure de réseau, qui est sélectionné parmi le groupe consistant en de la résine époxyde, de la résine d'acide acrylique, du polyacrylonitrile (PAN) et des combinaisons de ceux-ci.

21. Séparateur en céramique selon la revendication 17, dans lequel le polymère réticulé du système à double liant est un polymère réticulé avec une structure d'échelle.
